# EUROPÄISCHE PATENTSCHRIFT

(11) **EP 2 387 968 B1**
(45) Veröffentlichungstag und Bekanntmachung des Hinweises auf die Patenterteilung: **11.06.2014**
(21) Anmeldenummer: 11166221.9
(22) Anmeldetag: 16.05.2011
(51) Int. Cl.: A61C 13/265, A61C 13/277

(54) **Vorrichtung zum Festlegen von herausnehmbarem Zahnersatz an festsitzendem Zahnersatz**
Device for fixing removable dentures to fixed dentures
Dispositif de fixation d'une prothèse dentaire amovible sur une prothèse dentaire fixe

(30) Priorität: 21.05.2010 DE 202010007109 U
(43) Veröffentlichungstag der Anmeldung: 23.11.2011
(73) Patentinhaber: Si-tec GmbH Dental-Spezialartikel, 58313 Herdecke (DE)
(72) Erfinder: Robbenmenke, Dirk, 58313 Herdecke (DE)
(74) Vertreter: Von Kreisler Selting Werner - Partnerschaft von Patentanwälten und Rechtsanwälten mbB

(56) Entgegenhaltungen:
- DE-A1- 4 201 262
- DE-C1- 19 704 170
- DE-U1- 8 524 675

## Beschreibung

Die Erfindung betrifft eine Vorrichtung zum Festlegen von herausnehmbarem Zahnersatz an festsitzendem Zahnersatz mit einem Fixierelement, das ein Körperteil zum Einbau in den herausnehmbaren (oder alternativ in den festsitzenden) Zahnersatz aufweist.

Herausnehmbarer Zahnersatz ist an festsitzendem Zahnersatz vor unbeabsichtigtem Ablösen kraftschlüssig gehalten, Dabei kann der Kraftschluss entweder durch Reibung oder durch Formschiuss hergestellt werden. Beispiele für eine Vorrichtung zum formschlüssigen Festlegen von herausnehmbarem Zahnersatz an festsitzendem Zahnersatz finden sich in DE-U- 85 24 675, DE-U-89 09 755, DE-U-92 07 562, DE-A-36 11 322, DE-A-37 26 766, DE-C-40 90 310, DE-U-296 11 911, DE-C-196 27 597 C1, DE-C-196 50 083, DE-C-198 58 195, DE-C-100 11 968 und US-A-3 117 377, Vorrichtungen zum Festlegen von herausnehmbarem Zahnersatz an festsitzendem Zahnersatz durch Reibung werden beispielsweise von der Si-tec GmbH Dental-Spezialartikel, Gevelsberg, unter den Bezeichnungen TK-Snap, TK-Fric, TK-Soft und TK-Soft mini vertrieben.

Sämtlichen zuvor bekannten Vorrichtungen zum Festlegen von herausnehmbarem Zahnersatz an festsitzendem Zahnersatz ist ein Fixierelement gemeinsam, das in den herausnehmbaren (oder alternativ in den festsitzenden) Zahnersatz eingesetzt ist und in Fixieranlage mit dem festsitzenden (oder alternativ dem herausnehmbaren) Zahnersatz steht,

Je nach Anwendungsfall kann es wünschenswert sein, die Haltekraft, mit der herausnehmbarer Zahnersatz an festsitzendem Zahnersatz gehalten wird, einstellen zu können. Dies gilt insbesondere nach längeren Einsatzzeiten von herausnehmbarem Zahnersatz.

In DE-C-197 04 170 ist eine Aktiviervorrichtung für die dentale Prothetik zur Herstellung einer lösbaren Verbindung zwischen einem Sekundärteil und einem Primärteil beschrieben, das eine Schraube mit Schraubenkopf und Gewindeschaft aufweist, an dem sich entlang vom Schraubenkopf aus ein Federarm mit außenliegendem Friktionsteil erstreckt. Auf dem Gewinde befindet sich ein sogenanntes Aktivierungselement, das eine Bohrung mit Innengewinde aufweist, mit dem der Gewindeschaft in Eingriff steht. Im eingebauten Zustand lässt sich dieses Aktivierungselement durch Drehen der Schraube (wie eine Spindelmutter) längs des Gewindeschafts verfahren. Je näher das Aktivierungselement zum Schraubenkopf hin verfahren wird, desto weiter steht der Federarm vom Gewindeschaft ab.

Aufgabe der Erfindung ist es, eine Vorrichtung zum Festlegen von herausnehmbarem Zahnersatz an festsitzendem Zahnersatz zu schaffen, bei der sich die Haltekraft (Abzugskraft) auf einfache Art und Weise einstellen lässt.

Zur Lösung dieser Aufgabe wird mit der Erfindung eine Vorrichtung zum Festlegen von herausnehmbarem Zahnersatz an festsitzendem Zahnersatz vorgeschlagen, die versehen ist mit
- einem Fixierelement, das ein Körperteil zum Einbau in den herausnehmbaren Zahnersatz oder - alternativ - in den festsitzenden Zahnersatz und einen mit zwei gegenüberliegenden Enden versehenen elastisch biegbaren Fixierarm zur Fixieranlage an dem festsitzenden Zahnersatz oder - alternativ - an dem herausnehmbaren Zahnersatz aufweist, dessen erstes Ende mit dem Körperteil verbunden und dessen zweites Ende frei ist,
- wobei in dem Fixierelement zwischen dem Fixierarm und dem Körperteil ein Freiraum ausgebildet ist, in den der Fixierarm bei einer elastischen Verbiegung gelangt, und
- einem Abstandshalteelement, das zum Einstellen der Länge des biegbaren Abschnitts des Fixierarms längs einer Einbringachse zwischen dessen freien zweiten Ende und dem Abstandshalteelement in den Freiraum einbringbar ist, wobei das Abstandshalteelement an der dem Körperteil zugewandten Innenseite des Fixierarms anliegt.

Bei dieser Vorrichtung ist erfindungsgemäß vorgesehen,
- dass der Fixierarm auf seiner dem Freiraum zugewandten Innenseite eine zur Einbringachse parallele Fläche aufweist, an der das Abstandshalteelement anliegt,
- wobei der Fixierarm aufgrund allein des Einbringens des Abstandshalteelements in den Freiraum in seiner bei nicht in den Freiraum eingebrachtem Abstandshalteelement eingenommenen Ruheposition verbleibt,

Das erfindungsgemäße Fixierelement weist einen elastisch biegbaren Fixierarm auf, der mit dem übrigen Teil (Körperteil) des Fixierelements verbunden ist und ein freies Ende aufweist. Die Länge des biegbaren Abschnitts des Fixierarms ist mit Hilfe eines Abstandshalteelements einstellbar. Das Abstandshalteelement wird in einen Freiraum zwischen dem Fixierarm und dem Körperteil des Fixierelements eingebracht, wobei das Abstandshalteelement an der dem Körperteil zugewandten Seite des Fixierarms anliegt.

Das Abstandshalteelement wird vorteilhafterweise in Richtung der Erstreckung des Fixierarms von dessen mit dem Körperteil verbundenen ersten Ende in den Freiraum eingebracht. (Alternativ ist es auch möglich, das Abstandshafteelement quer zur Erstreckung des Fixierarms in den Freiraum einzubringen, und zwar wahlweise in einem von mehreren verschiedenen Abständen zum mit dem Körperteil verbundenen ersten Ende des Fixierarms).

Bei der erfindungsgemäßen Vorrichtung wird der Federarm durch zunehmendes Eindringen des Abstandshalteelements verkürzt, ohne dass dieser Federarm allein aufgrund des Herein- oder Herausbewegens des Abstandshalteelements seine Position verändert.

Bei dem Fixierelement der erfindungsgemäßen Vorrichtung besteht eine weitere Besonderheit darin, dass sich durch das Einbringen des Abstandshalteelements in den Freiraum zunächst die Länge des sich flexibel bzw. elastisch in den Freiraum hineinbewegbaren Abschnitts des Fixierarms verändert, ohne dass der Fixierarm seine Ruheposition verlässt, die er einnimmt, wenn das Abstandshalteelement nicht in den Freiraum eingebracht ist. Der Fixierarm weist damit an seiner dem Freiraum zugewandten Innenseite eine Fläche auf, die im Wesentlichen parallel zur Einbringachse des Abstandshalteelements verläuft. Dieses Merkmal ist insbesondere dann von Vorteil, wenn der Fixierarm einen Formschluss mit dem herausnehmbaren Zahnersatz oder alternativ dem festsitzenden Zahnersatz bildet, um die nötige Abzugshaltekraft aufzubringen.

Mit dem Abstandshalteelement lässt sich die Halte- bzw. Ablösekraft des herausnehmbaren Zahnersatzes am festsitzenden Zahnersatz einstellen; denn die Position des Abstandshalteelements bestimmt die Länge des effektiv biegbaren Abschnitts des Fixierarms. Je kleiner der Abstand des Abstandshalteelements zum freien zweiten Ende des Fixierarms ist, umso größer ist die Haltekraft, da sich der biegbare Abschnitt des Fixierarms verkurzt,

In vorteilhafter Weiterbildung der Erfindung kann die Vorspannkraft des Fixierarms erhöht werden, wenn in dem Freiraum ein Vorspannelement angeordnet ist oder in den Freiraum eingesetzt wird, wobei das Vorspannelement plastisch oder elastisch verformbar ist. Beispielsweise kann das Vorspannelement aus Kunststoff bestehen. Das Vorspannelement wird von dem Abstandshalteelement dann, wenn dieses weiter in den Freiraum eingeführt wird, immer stärker komprimiert, da nämlich das Abstandshalteelement gegen das Vorspannelement druckt. Das komprimierte Material, aus dem das Vorspannelement besteht, dehnt sich nun aus. Da das Vorspannelement an dem Körperteil des Fixierelements anliegt, druckt es nun gegen den Fixierarm und verleiht diesem eine Vorspannkraft- Damit erhöht sich die Abzugshaltekraft, die mit Hilfe des Fixierarms des Fixierelements der erfindungsgemäßen Vorrichtung aufgebracht werden kann. Das Vorspannelement ist beispielsweise als Füllkörper ausgebildet, der als bezogen auf das Fixierelement getrenntes Teil hergestellt wird, oder einstückig mit dem Körperteil oder dem Fixierarm des Fixierelements ausgebildet,

Die Fixieranlage des Fixierarms an dem festsitzenden (oder alternativ an dem herausnehmbaren) Zahnersatz erfolgt entweder durch Reibung oder durch Formschluss.

Das Fixierelement hat zweckmäßigerweise die Form eines Blocks mit kleinen Abmessungen im unteren Millimeterbereich und weist zwei gegenüberliegende obere und untere Enden auf. Der Fixierarm erstreckt sich zwischen dem unteren Ende und dem oberen Ende des Fixierelements, Der Freiraum, der es dem Fixierarm ermöglicht, sich in Richtung zum Körperteil elastisch zu verbiegen, kann beispielsweise als Spalt ausgebildet sein, der zum freien zweiten Ende des Fixierarms offen ist und dessen Grund im Bereich des ersten Endes des Fixierarms angeordnet ist.

Zweckmäßigerweise ist das Fixierelement an der Außenseite seines unteren Endes, an dem der Fixierarm mit dem Körperteil des Fixierelements verbunden ist, mit einer Bohrung versehen, die von der Außenfläche am unteren Ende des Fixierelements aus bis zum Freiraum verläuft. Durch diese Bohrung kann nun das Abstandshalteelement in den Freiraum eingebracht werden, wobei die Länge des Abstandshalteelements und/oder die Tiefe, bis zu der es in die Bohrung und/oder in den Freiraum eingebracht ist, die Länge des effektiv biegbaren Abschnitts des Fixierarms definiert. Bei dem Abstandshalteelement handelt es sich vorteilhafterweise um eine Schraube mit Gewindeschaft, wobei sich das Gewinde zweckmäßigerweise in das (Kunststoff-)Material des Fixierelements hineinschneidet. Alternativ kann die Bohrung als Gewindebohrung ausgeführt sein, Als Schraube eignet sich insbesondere eine Madenschraube, d. h. eine Schraube ohne Kopf, der nämlich beim Einschrauben in das Fixierelement dessen Material verdrängen würde und damit zu Spannungen im Material des Fixierelements führen könnte. Alternativ kann als Abstandshalteelement auch ein Stift o.dgl. längliches Teil eingesetzt werden. Der Vorteil der Ausbildung des Abstandshalteelements als Schraube ist darin zu sehen, dass sich diese recht einfach wieder aus dem Fixierelement entnehmen bzw. zuruckbewegen lässt, um die Haltekraft, sofern diese zunächst zu groß eingestellt worden ist, wieder zu kleineren Werten hin verändern zu können.

Insgesamt sollte dafür gesorgt werden, dass das Abstandshalteelement bündig mit der betreffenden Außenfläche des Fixierelement, über die es in dieses eingebracht ist, abschließt, zumindest aber nicht übersteht. Sollte das Abstandshalteelement in der Bohrung gegenuber der Außenfläche des Fixierelements zuruckspringen, so könnte die sich bildende Aussparung mit (Kunststoff- )Material o.dgl. verfüllt werden.

Es ist auch möglich, verschieden lange Abstandshalteelemente vorzusehen, die stets soweit in das Fixierelement eingebracht werden, dass sie mit der Außenfläche des Fixierelements abschließen, Je nach gewünschter Haltekraft wird dann das Abstandshalteelement mit entsprechender Länge verwendet.

In vorteilhafter Weiterbildung der Erfindung ist ferner vorgesehen, dass das Körperteil des Fixierelements an einer seiner von dem herausnehmbaren (oder alternativ von dem festsitzenden) Zahnersatz umschlossenen Außenflächen einen Haltevorsprung und/oder eine -vertiefung zur formschlüssigen Verbindung mit dem herausnehmbaren (oder alternativ mit dem festsitzenden) Zahnersatz zwecks Sicherung des Fixierelements gegen ein ungewolltes Ablösen beim Entfernen des herausnehmbaren Zahnersatzes vom festsitzenden Zahnersatz aufweist. Das Fixierelement wird praktischerweise in einen bei der Herstellung des herausnehmbaren (oder alternativ festsitzenden) Zahnersatzes ausgebildeten Aufnahmeraum eingesetzt. Dieser Aufnahmeraum ist vorzugsweise an einer seiner umlaufenden Seiten von außen zugänglich, um nämlich dann, wenn das Fixierelement in diesen Aufnahmeraum eingesetzt ist, das Abstandshalteelement mit einem Werkzeug (im Falle der Ausbildung des Abstandshalteelements als Schraube mit einem Schraubendreher) einstellen zu können. Der offene Aufnahmeraum birgt jedoch die Gefahr, dass es beim gewollten Ablösen des herausnehmbaren Zahnersatzes vom festsitzenden Zahnersatz zu einem ungewollten Ablösen bzw. Herausbewegen des Fixierelements aus dem Aufnahmeraum kommt. Durch den Formschluss, der durch den Haltevorsprung und/oder die -vertiefung in einer der vom Zahnersatz umschlossenen Außenflächen des Fixierelements gebildet wird, besteht nunmehr diese Gefahr in weitaus geringerem Umfang.

Die Erfindung wird nachfolgend anhand zweier Ausfuhrungsbeispiele und unter Bezugnahme auf die Zeichnung näher erläutert. Im Einzelnen zeigen dabei:
- Fig, 1: schematisch einen Schnitt durch Zahnersatz in demjenigen Bereich, in dem der herausnehmbare Zahnersatz auf festsitzendem Zahnersatz aufgeschoben und mit einer Haltevorrichtung gemäß einem ersten Ausfuhrungsbeispiel der Erfindung gehalten ist,
- Fig. 2: in perspektivischer Ansicht und teilweise in Explosionsdarstellung die Haltevorrichtung, wie sie beim Zahnersatz gemäß Fig, 1 eingesetzt wird,
- Fig. 3: einen Schnitt durch die Haltevorrichtung entlang der Linie III-III der Fig. 2,
- Fig. 4: eine perspektivische Unteransicht auf den herausnehmbaren Zahnersatz,
- Fig. 5: ebenfalls eine perspektivische Unteransicht des Zahnersatzes gemäß Fig. 1 mit eingesetzter Haltevorrichtung und Andeutung der Einbringung einer Schraube zur Einstellung der Haltekraft,
- Fig. 6: eine Seitenansicht auf die Haltevorrichtung mit schematischer Darstellung der Einstellung der Länge des biegbaren Abschnitts des Fixierarms zur Einstellung der Haltekraft und
- Fig. 7: eine perspektivische Ansicht, teilweise in Explosionsdarstellung, eines alternativen Ausfuhrungsbeispiels der Haltevorrichtung,

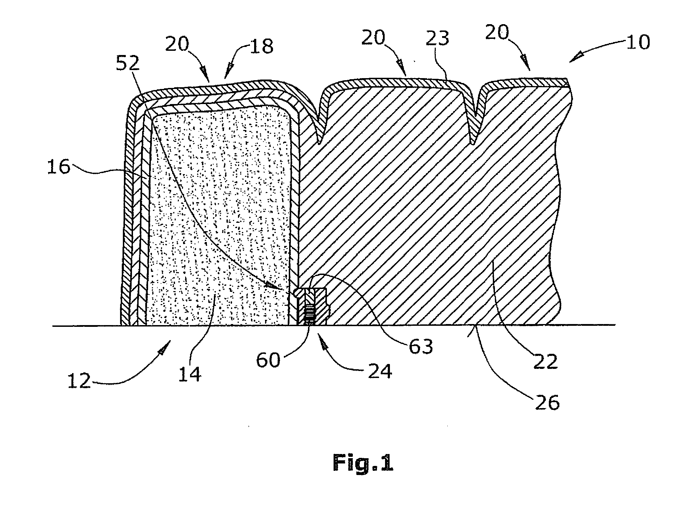

Fig. 1 zeigt schematisch einen Teilausschnitt von herausnehmbarem Zahnersatz 10, der an festsitzendem Zahnersatz 12 fixiert ist. Bei dem festsitzenden Zahnersatz 12 handelt es sich wie üblich um einen Zahnstumpf 14, der eine im wesentlichen konisch geschliffene Form aufweist und mit einem Metallüberzug 16 versehen ist, dessen Außenseiten im Wesentlichen parallel bzw, leicht konisch sind (Primärteil) . Auf dieses Primärteil bzw auf den festsitzenden Zahnersatz 12 wird nun ein Sekundärteil 18 des herausnehmbaren Zahnersatzes 10 aufgeschoben, wobei der herausnehmbare Zahnersatz bzw. das Sekundärteil 18 in diesem Ausfuhrungsbeispiel drei nebeneinander angeordnete Zähne 20 umfasst. Wie ublich weist der herausnehmbare Zahnersatz 10 bzw. das Sekundärteil 18 Metall oder Kunststoff als Tragkonstruktion 22 und eine Keramik-oder Kunststoffuberkronung 23 auf.

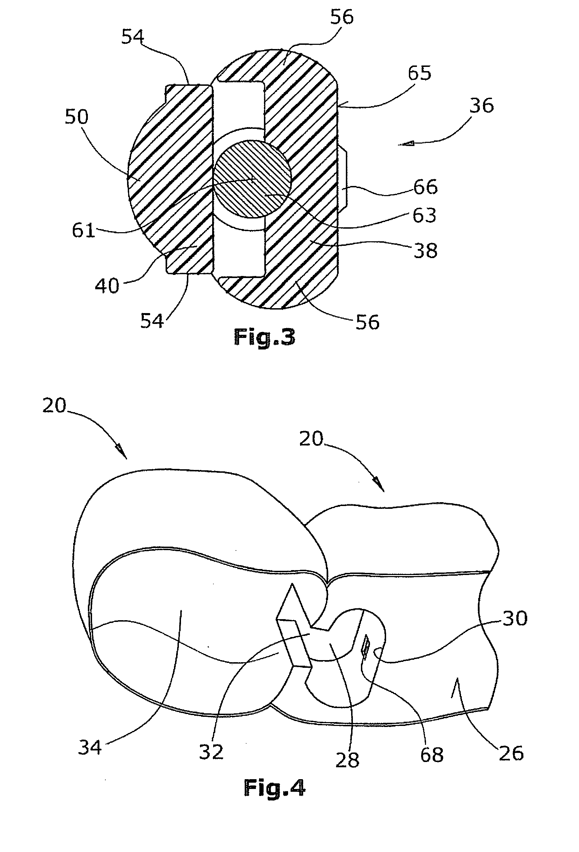

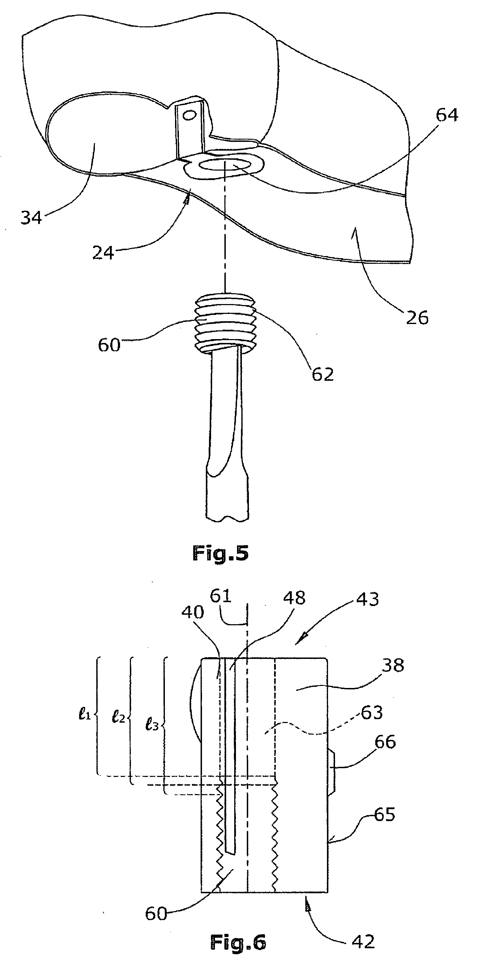

Intrakoronal zwischen zwei Zähnen 20 des herausnehmbaren Zahnersatzes befindet sich eine Haltevorrichtung 24, die, wie insbesondere anhand der Fign. 4 und 5 zu erkennen ist, von der Unterseite 26 des herausnehmbaren Zahnersatzes 10 in einen Aufnahmeraum 28 eingesetzt ist, der zur Unterseite 26 des herausnehmbaren Zahnersatzes über eine Öffnung 30 offen ist sowie einen Spalt 32 aufweist, der den Aufnahmeraum 28 mit dem Hohlraum 34 des auf dem festsitzenden Zahnersatz 12 befindlichen Zahns 20 des herausnehmbaren Zahnersatzes 10 verbindet.

Die Besonderheit der Haltevorrichtung 24 ist darin zu sehen, dass die von der Haltevorrichtung 24 erzeugte Haltekraft, mit der der herausnehmbare Zahnersatz 10 am festsitzenden Zahnersatz 12 gehalten ist, einstellbar ist.

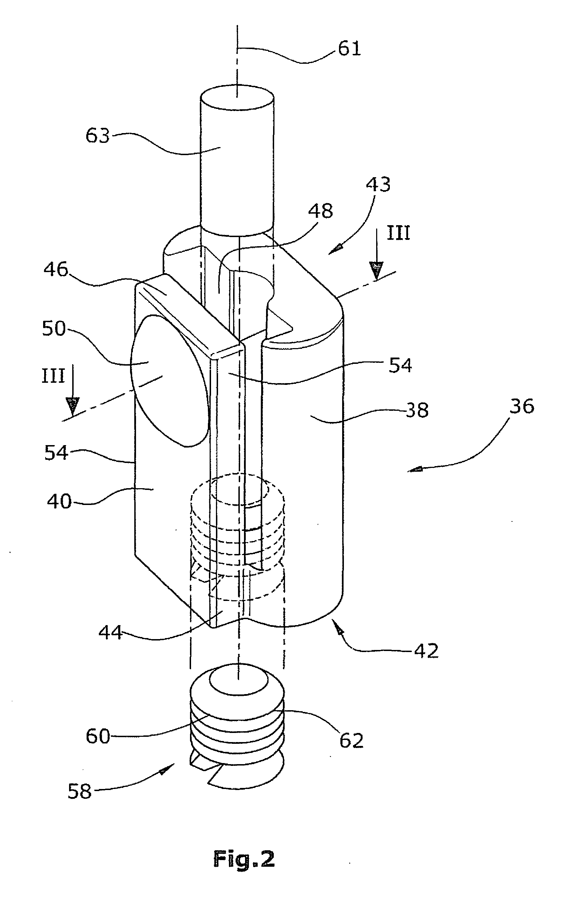

Die Konstruktion der Haltevorrichtung 24 ist in den Fign. 2, 3 und 5 gezeigt. Die Haltevorrichtung 24 weist ein Fixierelement 36 auf, das ein Körperteil 38 und einen elastisch biegbaren Fixierarm 40 aufweist. Das Fixierelement 36 weist ein unteres Ende 42 und ein oberes Ende 43 auf, zwischen denen sich der Fixierarm 40 von seinem am unteren Ende 42 des Fixierelements verbundenen ersten Ende 44 zu seinem zweiten freien Ende 46 erstreckt. Dem Fixierarm 40 gegenuberliegend weist das Körperteil 38 des Fixierelements 36 einen Freiraum 48 auf, in den sich der Fixierarm 40 hinein bewegt, wenn er in Richtung auf das Körperteil 38 gebogen wird, Der Freiraum 48 kann sich, wie es im Ausfuhrungsbeispiel der Fall ist, in das Körperteil 38 hinein erstrecken oder aber im einfachsten Fall als Spalt zwischen dem Körperteil 38 und dem Fixierarm 40 ausgebildet sein.

Im Ausführungsbeispiel gemäß den Fign. 1 bis 6 weist das zweite freie Ende 46 des Fixierarms 40 einen Rast- oder Haltevorsprung 50 auf, der im eingebauten Zustand der Haltevorrichtung 24 in eine korrespondierende Rast- bzw. Haltevertiefung 52 (angedeutet in Fig. 1) des Metallüberzugs 16 des festsitzenden Zahnersatzes 12 eintaucht.

Wie beispielsweise anhand von Fig 3 zu erkennen ist, erstreckt sich das Körperteil 38 des Fixierelements 36 über die beiden Lateralränder 54 des Fixierarms 40 hinaus, und zwar in Form von balligen oder zylindrischen Endabschnitten 56. Die Querschnittsform des Aufnahmeraums 28 ist gleich der Querschnittsform des Körperteils 38 des Fixierelements 36, wobei der Fixierarm 40 in den Spalt 32 eingetaucht ist und sich in diesem in Richtung auf das Körperteil 38 zu- bzw. von diesem wegbewegen kann.

Die effektiv biegbare Abschnittslänge des Fixierarms 40 bestimmt die Haltekraft, mit der der herausnehmbare Zahnersatz 10 am festsitzenden Zahnersatz 12 fixiert ist, Die effektive Länge dieses Abschnitts lässt sich erfindungsgemäß durch ein Abstandshalteelement 58 einstellen, das in diesem Ausführungsbeispiel die Form einer Schraube 60 und insbesondere einer Madenschraube aufweist. Das Gewinde 62 der Schraube 60 steht in Eingriff mit dem Material (zumeist Kunststoff) des Fixierelements 36, indem die Schraube 60 von der Unterseite 42 des Fixierelements 36 aus durch eine Bohrung 64 (siehe Fig. 5) eingeschraubt wird. Die Bohrung 64 mündet in den Freiraum 48 zwischen dem Fixierarm 40 und dem Körperteil 38 des Fixierelements 36 ein und erstreckt sich als zum Freiraum 48 offene Nut bzw. Vertiefung längs des Körperteils 38. Die Bohrung 64 kann alternativ auch als Gewindebohrung ausgeführt sein.

In den Freiraum 48 kann - in diesem Ausführungsbeispiel z. B. von oben - ein Fullelement 63 aus einem plastisch oder elastisch verformbaren Material (z. B. Kunststoff) eingesetzt sein, das sich am Körperteil 38 abstützt und an der Innenseite des Fixierarms 40 anliegt, Das Fullelement 63 ist z. B. als Stift oder dergleichen zylindrischer Vallkörper ausgebildet und dehnt sich radial aus bzw. baut radial wirkende Materialspannungen auf, wenn es axial komprimiert wird bzw. wirkenden Kräften ausgesetzt wird, wie sie z. B. durch das Abstandshalteelement 58 bzw. die Schaube 60 beim Eindringen in den Freiraum 48 erzeugt werden.

In den Fign, 5 und 6 ist angedeutet, wie die Haltevorrichtung 24 zu betätigen bzw. einzustellen ist, um die Haltekraft zu definieren. Die Schraube 60 wird in die Bohrung 64 eingeschraubt und ragt bis in den Freiraum 48 hinein. Wie anhand von Fig. 6 gezeigt, bestimmt die Tiefe, bis zu der die Schraube 60 in den Freiraum 48 in Richtung der Erstreckung der Einbringachse 61 eintaucht, die effektive Länge (beispielsweise *e*1, *e*2, *e*3 in Fig. 6) des Abschnitts des Fixierarms 40, innerhalb dessen dieser biegbar ist. Dabei wird ferner mit zunehmender Eindringtiefe der Schraube 60 von dieser auf das Vorspann-Füllelement 63 eine zunehmende Kompressionskraft ausgeübt, die die auf den Fixierarm 40 bzw. dessen freien Abschnitt wirkende Vorspannkraft erhöht. Im eingebauten Zustand des Fixierelements 36 (siehe Fig. 1) wird das Vorspann-Füllelement 63 durch das das Fixierelement 36 umgebende Material des herausnehmbaren Zahnersatzes 10 in dem Fixierelements 36 bzw. dessen Freiraum 48 gehalten.

Die Vorrichtung 24 ist gegen ein unbeabsichtigtes Herausnehmen aus dem Aufnahmeraum 28 gesichert. Zu diesem Zweck weist die Außenseite 65 des Fixierelements 36 bzw, des Körperteils 38 des Fixierelements 36 einen Haltevorsprung 66 auf, der in eine korrespondierende Haltevertiefung 68 (siehe beispielsweise Fig. 4) des Aufnahmeraums 28 eingetaucht ist,

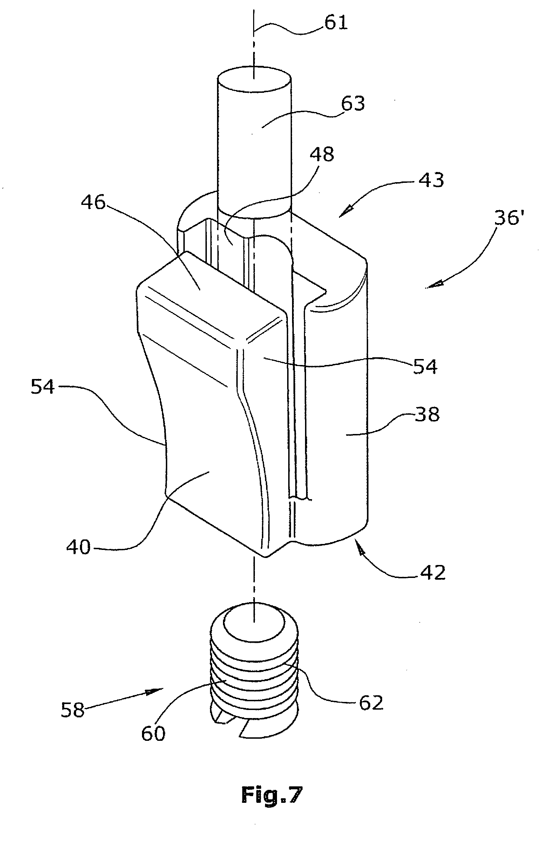

In Fig, 7 ist ein alternativ ausgebildetes Fixierelement 36' gezeigt. Soweit die Einzelteile des Fixierelements 36' denjenigen des Fixierelements 36 gleichen bzw. entsprechen, sind sie in Fig 7 mit den gleichen Bezugszeichen wie in den Fign. 1 bis 6 versehen.

Während das Fixierelement 36 aufgrund seines Rast- bzw. Haltevorsprungs 50 formschlüssig mit der Rast- bzw. Haltevertiefung 52 des herausnehmbaren Zahnersatzes 12 zusammenwirkt, erfolgt die Halterung beim Fixierelement 36' durch Reibung- Zu diesem Zweck ist das zweite freie Ende 46 des Fixierarms 40 verdickt ausgebildet. Dieses verdickte Ende 46 druckt gegen den festsitzenden Zahnersatz, der keinerlei Rast- bzw. Haltevertiefung 52 o.dgl. aufweist, so dass die Haltekraft durch Reibung des verdickten freien Endes 46 an dem festsitzenden Zahnersatz 12 erzeugt wird,

## Patentansprüche

1. Vorrichtung zum Festlegen von herausnehmbarem Zahnersatz (10) an festsitzendem Zahnersatz (12), mit
- einem Fixierelement (36), das ein Körperteil (38) zum Einbau in den herausnehmbaren Zahnersatz (10) oder - alternativ - in den festsitzenden Zahnersatz (12) und einen mit zwei gegenüberliegenden Enden versehenen elastisch biegbaren Fixierarm (40) zur Fixieranlage an dem festsitzenden Zahnersatz (12) oder - alternativ - an dem herausnehmbaren Zahnersatz (10) aufweist, dessen erstes Ende (44) mit dem Körperteil (38) verbunden und dessen zweites Ende frei (46) ist,
- wobei in dem Fixierelement (36) zwischen dem Fixierarm (40) und dem Körperteil (38) ein Freiraum (48) ausgebildet ist, in den der Fixierarm (40) bei einer elastischen Verbiegung gelangt, und
- einem Abstandshalteelement (58), das zum Einstellen der Länge (l1, l2, l3) des biegbaren Abschnitts des Fixierarms (40) längs einer Einbringachse (61) zwischen dessen freien zweiten Ende (46) und dem Abstandshalteelement (58) in den Freiraum (48) einbringbar ist, wobei das Abstandshalteelement (58) an der dem Körperteil (38) zugewandten Innenseite des Fixierarms (40) anliegt,
**dadurch gekennzeichnet,**
- **dass** der Fixierarm (40) auf seiner dem Freiraum (48) zugewandten Innenseite eine zur Einbringachse (61) parallele Fläche aufweist, an der das Abstandshalteelement (58) anliegt,
- wobei der Fixierarm (40) aufgrund allein des Einbringens des Abstandshalteelements (58) in den Freiraum (48) in seiner bei nicht in den Freiraum (48) eingebrachtem Abstandshalteelement (58) eingenommenen Ruheposition verbleibt.

2. Vorrichtung nach Anspruch 1, **dadurch gekennzeichnet, dass** in dem Freiraum (48) des Fixierelements (36) ein plastisch oder elastisch verformbares Vorspannelement (63) angeordnet oder in den Freiraum (48) einbringbar ist, wobei sich das Vorspannelement (63) an dem Körperteil (38) des Fixierelements (36) abstützt, und dass das Abstandshalteelement (58) beim Einbringen in den Freiraum (48) gegen das Vorspannelement (63) gedrückt wird, wobei sich das Vorspannelement (63) ausdehnt und gegen den Fixierarm (40) drückt und diesem eine Vorspannung verleiht.

3. Vorrichtung nach Anspruch 2, **dadurch gekennzeichnet, dass** das Vorspannelement (63) als bezogen auf das Fixierelement (36) getrenntes Teil oder einstückig mit dem Körperteil (38) oder dem Fixierarm (40) des Fixierelements (36) ausgebildet ist.

4. Vorrichtung nach einem der Ansprüche 1 bis 3, **dadurch gekennzeichnet, dass** der Fixierarm (40) zur Fixieranlage unter Reibung oder formschlüssig an dem festsitzenden Zahnersatz (12) oder - alternativ - an dem herausnehmbaren Zahnersatz (10) anliegt.

5. Vorrichtung nach einem der Ansprüche 1 bis 4, **dadurch gekennzeichnet, dass** das Fixierelement (36) zwei gegenüberliegende obere und untere Enden (42,43) aufweist, wobei das erste Ende (44) des Fixierarms (40) am unteren Ende (42) des Fixierelements (36) mit dessen Körperteil (38) verbunden ist und das freie zweite Ende (46) des Fixierarms (40) am oberen Ende (43) des Fixierelements (36) angeordnet ist.

6. Vorrichtung nach einem der Ansprüche 1 bis 5, **dadurch gekennzeichnet, dass** das Fixierelement (36) im Bereich des ersten Endes (44) des Fixierarms (40) zwischen diesem und dem Körperteil (38) eine sich von einer Außenfläche des Fixierelements aus bis in den Freiraum (48) erstreckende Bohrung (64) aufweist und dass das Abstandshalteelement (58) in die Bohrung (64) und durch diese in den Freiraum (48) einbringbar ist.

7. Vorrichtung nach einem der Ansprüche 1 bis 6, **dadurch gekennzeichnet, dass** das Abstandshalteelement (58) als Gewindeschaft einer Schraube (60) ausgebildet ist, bei der es sich insbesondere um eine Madenschraube handelt, wobei sich der Gewindeschaft in das Körperteil (38) und/oder den Fixierarm (40) hineinschneidet oder mit einem Gewinde in Eingriff steht.

8. Vorrichtung nach Anspruch 7, **dadurch gekennzeichnet, dass** die Länge des Schafts der Schraube (60) bzw. der Madenschraube und/oder die Tiefe, bis zu der der Schaft der Schraube (60) bzw. die Madenschraube in die Bohrung (64) und/oder den Freiraum (48) eingeschoben ist, die Länge (ℓ1, ℓ2, ℓ3) des biegbaren Abschnitts des Fixierarms (40) definiert.

9. Vorrichtung nach einem der Ansprüche 1 bis 6, **dadurch gekennzeichnet, dass** das Abstandshalteelement (58) als Stift ausgebildet ist.

10. Vorrichtung nach Anspruch 9, **dadurch gekennzeichnet, dass** die Länge des Stiftes und/oder die Tiefe, bis zu der der Stift in die Bohrung (64) und/oder den Freiraum (48) eingeschoben ist, die Länge (ℓ1, ℓ2, ℓ3) des biegbaren Abschnitts des Fixierarms (40) definiert.

11. Vorrichtung nach einem der Ansprüche 1 bis 10, **dadurch gekennzeichnet, dass** das Körperteil (38) des Fixierelements (36) an seiner von dem herausnehmbaren Zahnersatz (10) oder - alternativ - von dem festsitzenden Zahnersatz (12) umschlossenen Außenseite (65) einen Haltevorsprung (66) und/oder eine Haltevertiefung zur formschlüssigen Verbindung mit dem herausnehmbaren Zahnersatz (10) oder - alternativ - mit dem festsitzenden Zahnersatz (12) zwecks Sicherung des Fixierelements (36) gegen ein ungewolltes Ablösen beim Entfernen des herausnehmbaren Zahnersatzes (10) vom festsitzenden Zahnersatz (12) aufweist.

12. Vorrichtung nach einem der Ansprüche 1 bis 11, **dadurch gekennzeichnet, dass** der Fixierarm (40) zwei sich zwischen seinen beiden Enden (44,46) erstreckende gegenüberliegende Lateralränder (54) aufweist und dass der Körperteil (38) des Fixierelements (36) beidseitig über die Lateralränder (54) des Fixierarms (40) übersteht.

## Claims

1. A device for fixing removable dentures (10) to fixed dentures (12), comprising
- a fixing element (36) comprising a body portion (38) for installation in the removable dentures (10) or - alternatively - in the fixed dentures (12), and comprising an elastically flexible fixing arm (40), provided with two opposite ends, for fixing abutment on the fixed dentures (12) or - alternatively - on the removable dentures (10), the first end (44) of the fixing arm (40) being connected to the body portion (38) and the second end (46) of the fixing arm being free,
- wherein, in the fixing element (36) between the fixing arm (40) and the body portion (38), a free space (48) is formed which is entered by the fixing arm (40) when elastically flexed, and
- a spacer element (58) which, for adjusting the length (ℓ1, ℓ2, ℓ3) of the flexible part of the fixing arm (40), can be inserted into the free space (48) along an insertion axis (61) between the free second end (46) of the fixing arm (40) and the spacer element (58), the spacer element (58) being in abutment on the inner side of the fixing arm (40) facing toward the body portion (38),
**characterized in**
- **that** the fixing arm (40), on its inner side facing toward the free space (48), comprises a surface extending parallel to the insertion axis (61) and having the spacer element (58) arranged in abutment on it,
- wherein the fixing arm (40), due to the mere insertion of the spacer element (58) into the free space (48), will remain in its rest position assumed as in case of non-insertion of the spacer element (58) into the free space (48).

2. The device according to claim 1, **characterized in that**, in the free space (48) of the fixing element (36), a plastically or elastically deformable biasing element (63) is arranged or can be inserted into the free space (48), with the biasing element (63) being supported on the body portion (38) of the fixing element (36), and that the spacer element (58), when being inserted into the free space (48), is pressed against the biasing element (63), whereby the biasing element (63) is being expanded and pressed against the fixing arm (40), thus subjecting it to a bias.

3. The device according to claim 2, **characterized in that** the biasing element (63) is formed as a separate component in relation to the fixing element (36) or is integrally formed with the body portion (38) or the fixing arm (40) of the fixing element (36).

4. The device according to any one of claims 1 to 3, **characterized in that**, for fixing abutment, the fixing arm (40) is arranged frictionally or with form-locking engagement on the fixed dentures (12) or - alternatively - on the removable dentures (10).

5. The device according to any one of claims 1 to 4, **characterized in that** the fixing element (36) comprises two opposite upper and lower ends (42,43), the first end (44) of the fixing arm (40) being connected, at the lower end (42) of the fixing element (36), to the body portion (38) of the fixing element, and the second, free end (46) of the fixing arm (40) being arranged at the upper end (43) of the fixing element (36).

6. The device according to any one of claims 1 to 5, **characterized in that**, in the area of the first end (44) of the fixing arm (40), the fixing element (36) comprises, between the fixing arm (40) and the body portion (38), a bore (64) extending from an outer surface of the fixing element (36) into the free space (48), and that the spacer element (58) can be inserted into the bore (64) and through the bore (64) into the free space (48).

7. The device according to any one of claims 1 to 6, **characterized in that** the spacer element (58) is formed as the threaded shaft of a screw (60) which particularly is a headless screw, the threaded shaft cutting into the body portion (38) and/or the fixing arm (40) or is arranged in engagement with a thread.

8. The device according to claim 7, **characterized in that** the length of the shaft of the screw (60) and respectively the headless screw, and/or the depth to which the shaft of the screw (60) and respectively the headless screw has been inserted into the bore (64) and/or the free space (48), defines the length (ℓ1, ℓ2, ℓ3) of the flexible part of the fixing arm (40).

9. The device according to any one of claims 1 to 6, **characterized in that** the spacer element (58) is formed as a pin.

10. The device according to claim 9, **characterized in that** the length of the pin and/or the depth to which the pin has been inserted into the bore (64) and/or the free space (48), defines the length (ℓ1, ℓ2, ℓ3) of the flexible part of the fixing arm (40).

11. The device according to any one of claims 1 to 10, **characterized in that** the body portion (38) of the fixing element (36), on its outer side (65) enclosed by the removable dentures (10) or - alternatively - by the fixed dentures (12), comprises a holding projection (66) and/or a holding recess for form-locking connection to the removable dentures (10) or - alternatively - to the fixed dentures (12) for securing the fixing element (36) against undesired detachment when removing the removable dentures (10) from the fixed dentures (12).

12. The device according to any one of claims 1 to 11, **characterized in that** the fixing arm (40) comprises two opposite lateral edges (54) extending between its two ends (44,46) and that the body portion (38) of the fixing element (36) on both of its sides extends beyond the lateral edges (54) of the fixing arm (40).

## Revendications

1. Dispositif de fixation d'une prothèse dentaire amovible (10) sur une prothèse dentaire fixe (12), comportant
- un élément de fixation (36), qui comprend une partie formant corps (38) pour encastrement dans la prothèse dentaire amovible (10), ou - en variante - dans la prothèse dentaire fixe (12), et un bras de fixation (40), pouvant subir une déformation élastique, pourvu de deux extrémités opposées, pour appui en fixation sur la prothèse dentaire fixe (12) ou - en variante - sur la prothèse dentaire amovible (10), dont la première extrémité (44) est reliée à la partie formant corps (38) et dont la deuxième extrémité (46) est libre,
- un espace libre (48), dans lequel le bras de fixation (40) parvient lors d'une déformation élastique, étant configuré dans l'élément de fixation (36) entre le bras de fixation (40) et la partie formant corps (38), et
- un élément formant entretoise (58), qui pour ajuster la longueur (11, 12, 13) du segment déformable du bras de fixation (40), peut être inséré dans l'espace libre (48) le long d'un axe d'insertion (61) entre sa deuxième extrémité libre (46) et l'élément formant entretoise (58), l'élément formant entretoise (58) s'appuyant contre le côté intérieur, dirigé vers la partie formant corps (38), du bras de fixation (40),
**caractérisé**
- **en ce que** le bras de fixation (40) comprend sur son côté intérieur dirigé vers l'espace libre (48) une surface parallèle à l'axe d'insertion (61), contre laquelle s'appuie l'élément formant entretoise (58),
- le bras de fixation (40), du seul fait de l'insertion de l'élément formant entretoise (58) dans l'espace libre (48), restant dans sa position de repos qu'il adopte lorsque l'élément formant entretoise (58) n'est pas inséré dans l'espace libre (48).

2. Dispositif selon la revendication 1, **caractérisé en ce qu'**un élément de pré-tension (63) pouvant subir une déformation plastique ou élastique est disposé dans l'espace libre (48) de l'élément de fixation (36) ou peut être inséré dans l'espace libre (48), l'élément de pré-tension (63) s'appuyant contre la partie formant corps (38) de l'élément de fixation (36), et **en ce que** l'élément formant entretoise (58) est, lors de son insertion dans l'espace libre (48), comprimé contre l'élément de pré-tension (63), moyennant quoi l'élément de pré-tension (63) subit une dilatation et vient comprimer le bras de fixation (40) conférant ce faisant une pré-tension à ce dernier.

3. Dispositif selon la revendication 2, **caractérisé en ce que** l'élément de pré-tension (63) est configuré comme une pièce séparée par rapport à l'élément de fixation (36), ou formant une pièce unique avec la partie formant corps (38) ou le bras de fixation (40) de l'élément de fixation (36).

4. Dispositif selon l'une des revendications 1 à 3, **caractérisé en ce que** le bras de fixation (40), pour un appui en fixation avec frottement ou par liaison avec correspondance de forme, s'appuie contre la prothèse dentaire fixe (12) ou - en variante - sur la prothèse dentaire amovible (10).

5. Dispositif selon l'une des revendications 1 à 4, **caractérisé en ce que** l'élément de fixation (36) comprend deux extrémités (42, 43), supérieure et inférieure, opposées, la première extrémité (44) du bras de fixation (40) étant reliée à l'extrémité inférieure (42) de l'élément de fixation (36) par sa partie formant corps (38), et la deuxième extrémité libre (46) du bras de fixation (40) étant disposée contre l'extrémité supérieure (43) de l'élément de fixation (36).

6. Dispositif selon l'une des revendications 1 à 5, **caractérisé en ce que** l'élément de fixation (36) comprend dans la zone de la première extrémité (44) du bras de fixation (40), entre ce dernier et la partie formant corps (38), un alésage (64), s'étendant à partir d'une surface extérieure de l'élément de fixation jusqu'à l'intérieur de l'espace libre (48), et **en ce que** l'élément formant entretoise (58) peut être inséré dans l'alésage (64) et, en traversant ce dernier, dans l'espace libre (48).

7. Dispositif selon l'une des revendications 1 à 6, **caractérisé en ce que** l'élément formant entretoise (58) est configuré comme une tige filetée d'une vis (60), laquelle est en particulier une vis sans tête, la tige filetée pénétrant en contre-dépouille dans la partie formant corps (38) et/ou dans le bras de fixation (40), ou étant en prise avec un filetage.

8. Dispositif selon la revendication 7, **caractérisé en ce que** la longueur de la tige de la vis (60) ou de la vis sans tête, et/ou la profondeur jusqu'à laquelle la tige de la vis (60) ou la vis sans tête est enfoncée dans l'alésage (64) et/ou dans l'espace libre (48), définissent la longueur (11, 12, 13) du segment déformable du bras de fixation (40).

9. Dispositif selon l'une des revendications 1 à 6, **caractérisé en ce que** l'élément formant entretoise (58) est configuré comme une broche.

10. Dispositif selon la revendication 9, **caractérisé en ce que** la longueur de la broche et/ou la profondeur jusqu'à laquelle la broche est enfoncée dans l'alésage (64) et/ou dans l'espace libre (48), définissent la longueur (11, 12, 13) du segment déformable du bras de fixation (40).

11. Dispositif selon l'une des revendications 1 à 10, **caractérisé en ce que** la partie formant corps (38) de l'élément de fixation (36) comprend sur son côté extérieur (65) entouré par la prothèse dentaire amovible (10) ou - en variante - par la prothèse dentaire fixe (12), une saillie de retenue (66) et/ou un renfoncement de retenue, pour liaison avec correspondance de forme avec la prothèse dentaire amovible (10) ou - en variante - avec la prothèse dentaire fixe (12), dans le but de sécuriser l'élément de fixation (36) contre un détachement involontaire lorsque la prothèse dentaire amovible (10) est retirée de la prothèse dentaire fixe (12).

12. Dispositif selon l'une des revendications 1 à 11, **caractérisé en ce que** le bras de fixation (40) comprend deux bords latéraux (54) opposés, s'étendant entre ses deux extrémités (44, 46), et **en ce que** la partie formant corps (38) de l'élément de fixation (36) dépasse des deux côtés des bords latéraux (54) du bras de fixation (40).
